# EUROPEAN PATENT APPLICATION

(11) **EP 4 321 327 A1**
(43) Date of publication of application: **14.02.2024**
(21) Application number: 22189920.6
(22) Date of filing: 11.08.2022
(51) Int. Cl.: B29C 70/00, B29C 53/58, B29C 53/60, B29C 53/64, B29C 53/80, B29C 65/02, B29C 65/00, B29C 70/32, B29C 70/68, B29C 70/82, B29C 70/88, F16L 11/118, F16L 11/24, B29C 53/78, B29C 70/54, B29C 70/56, B29D 23/18, F16L 11/127, F16L 11/15, F16L 11/16

(54) **IMPROVED ELECTRICALLY CONDUCTIVE CORRUGATED HOSE**

(71) Applicant: Danfoss Power Solutions II Technology A/S, 6430 Nordborg (DK)
(72) Inventor: Muco, Recep, 59520 Kapakli Tekirdag (TR); Aptiogullari, Erhan, 59500 Kapakli Tekirdag (TR); Yasarli, Yavuz, 59520 Kapakli Tekirdag (TR); Akbulut, Ahmet, 59520 Kapakli Tekirdag (TR)
(74) Representative: Nestler, Jan Hendrik

(57) **Abstract**

The invention relates to amethod for producing an elastic hose (2). The method comprises the following steps:
- providing a thermoplastic material (9) in a molten state,
- providing the melted thermoplastic material (9) onto a mandrel (5),
- placing an electrically conductive wire (4) onto the melted thermoplastic material (9),
- inserting the electrically conductive wire (4) into the melted thermoplastic material (9) by applying a force that causes a component of force in at least a section of the electrically conductive wire (4) that points in a direction normal to the surface of the thermoplastic material (9).

## Description

Flexible hoses are nowadays used in a wide area of technical fields for transporting a wide variety of materials.

Flexible hoses are, for example, very well known for transporting gases and/or liquids. Just to name some examples out of a broad range of possibilities, gases can be air, technical gases and so on, while fluids can be all types of fluid, like water (fresh water, wastewater), gasoline, oil and so on.

However, flexible hoses are also used for transporting solid particles. Here, the solid particles are sometimes conveyed simply under the influence of gravity, or are conveyed together with a conveying agent like a flow of air. Examples for goods that are frequently conveyed in flexible hoses are dust particles in the case of vacuum cleaners, wood chips (for wood pellet heating), granules of synthetic raisin or foodstuff (like grain, oat flakes or the like). It is to be noted that the mentioned examples are just very specific examples for a vast plethora of possible materials that can be transported in this way.

Depending on the type of material to be transported (in particular gases, liquids and/or solids), the transportation speed involved, the pressures that are occurring (inside the and outside of the hose), the aggressivity of the environment of the material to be transported, the required flexibility of the flexible hose (in particular with respect to the radii of the bends and the frequency with which the hose is moved/bent) and even further considerations, various types of designs and various types of materials for flexible hoses have been proposed in the past.

In particular, if a hose is frequently bent, it has to be resistant against the development of kinks that might occur in the flexible hose. For such cases (but not limited to such cases), so-called corrugated hoses are widely used in various fields of technology. Just to name a very well-known example that is even known to the end consumer: a corrugated hose of a vacuum cleaner. Here, the normal (essentially cylindrical) hose-like/tube-like shape shows additionally a spiral-like protrusion with an increased thickness of material (and sometimes made of a different material) that stiffens the hose (in particular for lowering the risk of kinks occurring), while still maintaining a high flexibility.

A further problem may occur in particular when solid particles have to be conveyed using an elastic hose. Here, electrostatic effects frequently occur: due to the friction of the solid particles along the inner side of the elastic hose, electrostatic charges may be created and may build up. Such a build-up of electrostatic charges can be a nuisance, for example, since they can lead to a clogging of the material to be conveyed. This clogging can occur by an agglomeration of material to be conveyed at the inside of the hose and/or by the creation of lumps of material to be conveyed. However, a build-up of electrostatic charges can even be dangerous, for example in case flammable or explosive material is conveyed or the material is conveyed in dangerous environments. Here, an effective way of getting rid of the electrostatic charges is a required safety measure.

A well known possibility for dealing with electrostatic charges is to include an electrically conductive material into the hose. This electrically conductive material can be a mesh of electrically conductive wires (typically using a conductive metal like copper) that is introduced into the material of the sheath of the elastic hose. An alternative design that is also known and widely employed is to introduce a simple, "linear" electrically conductive wire into the cable sheath. The electrically conductive wire (or a plurality thereof) may be inserted in an essentially axial direction in the cable sheath. Another design exists, where the electrically conductive wire is arranged spirally along and usually within the sheath of the elastic hose. In the case of a corrugated hose the electrically conductive wire may essentially follow the protruding part of the corrugated hose with the increased thickness (the "corrugation" of the corrugated hose), or may be even included in this protruding part of the corrugated hose.

While such designs work feasibly well in practice, they still show deficiencies, in particular with respect to the durability of the corrugated hose. In particular, if an electrically conductive wire is used that essentially follows the spirally-arranged protruding material of the corrugated hose (in case of a corrugated hose), a delamination effect between the thermoplastic material of the corrugated hose and the (typically metallic) material of the electrically conductive wire is frequently observed, even after relatively short time spans. An early visible indicator for such a delamination is typically the formation of "bubbles" in the vicinity of the electrically conductive wire. These "bubbles" may evolve to a separation of the hose's sheath into several layers, resulting in a significant mechanical deterioration of the hose and ultimately to a fracture of the elastic hose. It is clear that such a behaviour is problematic, since a relatively frequent replacement of the elastic hose is necessary, leading to maintenance cost and a standstill of the respective machinery for maintenance purposes.

It is therefore an object of the present invention to suggest a method for producing an elastic hose that is improved over the presently known methods for producing an elastic hose. It is further an object of the present invention to propose an elastic hose that comprises an electrically conductive wire that is improved over presently known elastic hoses that comprise an electrically conductive wire. Yet another object of the present invention is to propose a production arrangement for producing elastic hoses that is improved over presently known production arrangements for producing elastic hoses.

A method for producing an elastic hose comprising an electrically conductive wire according to the present disclosure and/or an elastic hose comprising an electrically conductive wire and/or a production arrangement for producing elastic hoses according to the present disclosure solves this object/solve these objects.

It is suggested to perform a method for producing an elastic hose in a way that the method comprises: providing a thermoplastic material in a molten state; providing the melted thermoplastic material onto a mandrel; placing an electrically conductive wire onto the melted thermoplastic material; and inserting the electrically conductive wire into the melted thermoplastic material by applying a force that causes a component of force in at least a section of the electrically conductive wire that points in a direction normal to the surface of the thermoplastic material.

The thermoplastic material can be essentially any type of material. As an example, the thermoplastic material can be chosen from the group, comprising PVC (polyvinyl chloride), PU (polyurethane), PP (polypropylene), PET (polyethylene terephthalate) or the like. The essential feature is that the thermoplastic material shows a solid state below a certain temperature, and a molten state above a certain temperature. Typically, the solid state is present at an environmental temperature, the elastic hose is intended to be used at (where usually a safety margin is considered). This is typically the case for temperatures below 130°C, 120°C, 110°C, 100°C, 90°C, 80°C, 70°C, 60°C, 50°C, 40°C or 30°C (typical environmental temperature; this environmental temperature should be chosen to be below the melting temperature, or seen vice versa, the material should be chosen in a way that it's melting temperature is higher as the expected maximum environmental temperature). In particular, the (elastic) solid state may be understood in a way that it shows reversible elastic or elastically deformable properties, at least for deformations up to a certain extent (i.e., breaks may still occur when bending too far, in particular even in the elastic solid state). Also, for at least a variety of possible thermoplastic materials a low limit temperature (or a range thereof) for the (elastic) solid state of the material may exist as well. In particular, below such a lower limit temperature, brittle effects may occur on comparatively slight deformations of the material. The lower temperature limit may be, for example, -100°C, -90°C, -80°C, -70°C, -60°C, -50°C, -40°C, -30°C, -20°C or -10°C. The molten state of the thermoplastic material may be defined as a state, in which the material will be permanently or non-reversibly deformed under small forces and/or under small deformations. In particular, the molten state may encompass the possibility of extruding the material, moulding or press moulding the material or the like. It should be noted that the molten state may encompass a paste-like state or a molten state with a high or a relatively high viscosity. Nevertheless, it is also possible that the molten state may encompass a state with a comparatively low, low or very low viscosity (for example in the order of the viscosity of water). Typically, the molten state may be present above 120°C, 130°C, 140°C, 150°C, 160°C, 180°C, 190°C, 200°C, 210°C, 220°C, 230°C, 240°C, 250°C, 275°C or 300°C (melting temperature). Possibly, the molten state may also be referred to as a liquid state or liquidous state (also for thermoplastic material usually "molten state" is used). Only for completeness it is to be noted that there may be an upper limit temperature (range) were the thermoplastic material will (start to) decompose (in particular chemically) or (partially) vaporise. Further, there may be a transitional range between the (elastic) solid state and the molten state, where the respective thermoplastic material may show a transitional regime, where the respective thermoplastic material will show a mixture of selected features from the typical features of the solid state and the typical features of the molten state of the respective material. The basic properties of such thermoplastic materials will usually be according to the known properties in the state of the art.

The mandrel may be made of a material that is usually employed for tools, like metallic alloys, steel, machine tool steel or the like. The mandrel may be provided with heating means and/or with cooling means. Heating means may be integrated into the mandrel, so that a start-up heating of the mandrel (when starting production of the elastic hose) or a permanent heating of the mandrel is possible. However, it is also possible that additionally or alternatively a heating means is provided by external, separate and/or removable heating means, so that the mandrel may be heated when starting up the respective production process (heat blanket, use of heated liquids that will be poured over the mandrel or the like). After initial heating, the external, separate and/or removable heating means may be removed and production be started consequently. It is to be noted that when producing an elastic hose using thermoplastic material, a permanent heating source may be the (heated) thermoplastic material itself. The mandrel may be made of an essentially solid and/or one-piece material. Additionally or alternatively at least a part of the mandrel may be made of a bundle of filaments or the like. Further, internal voids may be provided, for example for providing internal heating means, internal cooling means, sensors (for example temperature sensors), wires for providing electricity to the sensors/heating means and/or for transmitting measurement data, and the like. How the melted thermoplastic material is provided on the mandrel is essentially irrelevant. As an example, an extrusion technique (in particular an extrusion technique, using a die) may be employed. However, an extrusion process, a pouring process, a moulding process or the like may be employed, possibly using a consecutive spreading process using a spreading knife or the like. The mandrel will typically show an elongated design, typically with a length of several metres. The cross section of the mandrel (normal to the axial direction of the elongated mandrel) will usually show a somewhat circular, rounded or ellipsoidal shape. However, different cross-sectional shapes may be envisaged as well, like quadratic, rectangular or polygonal shapes (possibly with rounded corners). The aforementioned cross-sectional shapes may relate to the inner shape and/or to the outer shape of the mandrel and/or the elastic hose, at least for certain or even substantive parts of the mandrel and/or of the elastic hose. In particular with respect to the outer cross-sectional shape, it should be mentioned that a web-like protrusion for providing a corrugated hose (in other words, the corrugation of the corrugated hose), holding flanges, holding hangers or the like may be present that may deviate from the so-to-say "strict" basic shape (like a circular shape) from a strict point of view. However, for the present disclosure, such "deviations" may be encompassed by the basic cross-sectional shape as well.

When inserting the electrically conductive wire into the melted thermoplastic material, the temperature of the melted thermoplastic material may be about the same, as compared to the time when the melted thermoplastic material is provided on the mandrel. However, it may be advantageous to somewhat lower the temperature of the melted thermoplastic material by up to 5°C, 10°C, 15°C, 20°C, 25°C, 30°C, 35°C, 40°C, 45°C or 50°C. In particular, lowering of the temperature by at least 0°C, 5°C, 10°C, 15°C, 20°C, 25°C, 30°C, 35°C or 40°C may be envisaged as well. Combining the aforementioned lower and upper numbers, a range may be defined as well. By lowering the temperature of the thermoplastic material, in particular by cooling the mandrel, it may be possible to realise a varying viscosity of the melted thermoplastic material that is placed on the mandrel, for example in a radial direction of the sheath of the elastic hose. This may prove to be advantageous for placing the electrically conductive wire at a certain depth within the sheath of the elastic hose, in particular for fully enclosing the electrically conductive wire within the sheath of the elastic hose. However, additionally or alternatively an intermediate cooling means may be used for cooling, for example an orifice that releases cooling water or the like. In particular in case that the thermoplastic material comprises or consists of two (or more) different types of thermoplastic material, it may be even the case that a first one of the thermoplastic materials remains in a molten state, while a second one of the thermoplastic materials has already hardened after the (intermediate) cooling process. In any case, when placing the electrically conductive wire onto the melted thermoplastic material/when applying the pulling force to the electrically conductive wire/when inserting the electrically conductive wire into the melted thermoplastic material, the melted thermoplastic material should still be at least partially in a state, where a permanent/non-reversible deformation of the thermoplastic material is possible. In other words, it should still be at least partially in the molten state (albeit the viscosity of the thermoplastic material might be higher). Preferably, the melted thermoplastic material is still liquid to an extent that the melted thermoplastic material flows together behind the electrically conductive wire (when/after inserting the electrically conductive wire). In other words, the electrically conductive wire may be inserted in a way that it is fully enclosed in the melted thermoplastic material after inserting. In even other words, the electrically conductive wire may be inserted into the thermoplastic material in a positive form locking way. The force that causes a component of force in at least a section of the electrically conductive wire that points in a direction normal to the surface of the thermoplastic material, may be applied in an essentially arbitrary way. In particular, a force may be applied onto the wire only (pulling and/or pushing and/or pressing force). Thence, usually no contact of a respective wire release tool with the melted thermoplastic material will occur, so that no melted thermoplastic material is lost and/or so that the tool that is used for applying the force will not come into contact with the melted thermoplastic material (at least under usual operating conditions). This can avoid an agglomeration of thermoplastic material on the respective tool, which in turn alleviates or even avoids the necessity of (frequently) cleaning the respective tool. Further, the decision of whether a pushing force and/or a pulling force and/or a pressing force is applied (for example onto the electrically conductive wire), may be made according to the situation. However, typically a pulling force onto the electrically conductive wire is simpler to apply and may yield an improved result.

In particular, it is suggested that the mandrel is rotated when placing the melted thermoplastic material onto the mandrel. This way, an advantageous distribution of the melted thermoplastic material can be achieved. Furthermore, the insertion process of the electrically conductive wire may be effectuated easily, in particular by providing/feeding the electrically conductive wire from a certain, fixed point (for example a release orifice or the like). The process of placing and inserting the electrically conductive wire into the melted thermoplastic material may be effectuated by the rotation of the mandrel. Due to the rotation of the mandrel, the respective section of the melted thermoplastic material, where the electrically conductive wire is placed onto the melted thermoplastic material and/or is inserted into the melted thermoplastic material does change in the course of the production of the elastic hose. It is to be noted that it is of course also possible that additionally or alternatively the release point of the electrically conductive wire and/or the point, where a force is applied that causes a component of force in at least a section of the electrically conductive wire that points in a direction normal to the surface of the thermoplastic material, is rotated around the mandrel. Essentially, what usually counts, is a relative rotational movement between the point, where the electrically conductive wire is released and the position of the thermoplastic material that is located on the mandrel, which in turn will cause a movement of the point where the electrically conductive wire is placed onto the melted thermoplastic material and/or is inserted into the melted thermoplastic material. Of course, different designs may be employed as well. Just to name a possibility: a dispensing head for the electrically conductive wire may be arranged on a movable carriage, in particular a movable carriage that can be moved in different directions, in particular directions that are arranged perpendicular to each other and/or that do serve a different degree of freedom of movement, in particular of a translational movement and/or of a rotational movement. Using a rotation of the mandrel, it is further possible that the rotational movement sort of cancels a creeping movement of the (still) melted thermoplastic material due to gravitational effects. Just to name an example: if the mandrel would not be rotated, melted thermoplastic material might creep to a lower section of the mandrel, which would result in a varying thickness of the sheath of the elastic hose along its circumference. Due to the rotation, this usually adverse effect can be easily alleviated or even avoided.

It is to be noted that in addition to the electrically conductive wire, additional methods/devices for providing an electric conductivity may be used. Just to name some examples: an electrically conductive mesh may be embedded into the sheath of the elastic hose and/or electrically conductive thermoplastic material may be used, at least for parts of the sheath of the elastic hose.

It is further suggested to perform the method in a way that the electrically conductive wire is placed onto the thermoplastic material in an essentially tangential direction and/or in a deflected tangential direction, wherein preferably a defined tensile force, more preferably a controlled tensile force, acts onto the electrically conductive wire. This suggestion can be realised very easily, if a dispenser head/releasing point of the electrically conductive wire rotates relative to the mandrel/the melted thermoplastic material that is placed on the mandrel. This can be easily achieved by a rotation of the mandrel, as previously suggested. Depending on the exact production method chosen, by using one of these options (or even a combination of both), a spiral/helical arrangement of the electrically conductive wire in the thermoplastic material can be realised easily. First experiments have shown that such a spiral/helical arrangement is particularly helpful for achieving a long lifetime of the resulting elastic hose. By using a defined tensile force, the location of the electrically conductive wire in the thermoplastic material, in particular with respect to the radial direction of the elastic hose, can be easily controlled (this statement may particularly relate to the situation in the final product). In other words, the penetration depth/arrangement depth of the electrically conductive wire in the thermoplastic material can be realised by choosing an appropriate tensile force. The tensile force has to be chosen depending on the temperature and viscosity of the thermoplastic material, the variation of the temperature/the viscosity within the sheath of thermoplastic material (in particular in the radial direction of the elastic hose), the thickness of the sheath of the elastic hose, the diameter of the electrically conductive wire, the production speed (in particular the speed with which the electrically conductive wire is placed onto the melted thermoplastic material) and/or the geometrical arrangement of the placement, in particular during the insertion process, just to name the usual main parameters. While it may be sufficient to use a passive set-up, for example by setting up a certain friction of the electrically conductive wire with (part of) the dispensing head or the like, it is preferred if the tensile force is controlled, for example using an appropriate sensor and an appropriate breaking means/arresting means. Based on the current measurement value of the sensor, the tensile force can consequently be adapted to stay within a certain allowed range and/or to stay at (or to fluctuate around) the defined tensile force using appropriate actuators.

Even further, it is suggested to perform the presently suggested method in a way that the electrically conductive wire is placed onto the melted thermoplastic material by an adjustable release tool, wherein the release tool is preferably adjustable with respect to its release position and/or the tensile force that acts onto the electrically conductive wire. In particular, the release tool may comprise one, two, three or four (or even more) legs/levers that are connected to each other in a movable way. In particular, a moveability between neighbouring levers may relate to a rotational moveability (pivoting movement/pivoting moveability) and/or to a lateral moveability (for example enabling a telescopic movement of two neighbouring levers. In particular, the moveability may only be allowed during an adjustment phase (or later during a re-adjustment phase) of the release tool. In an operating position, however, the respective joints should preferably be fixed. This should apply at least for certain joints. Furthermore, the release tool may comprise wheels, rollers or the like for allowing a movement of the electrically conductive wire without a grinding contact with (parts of the) release tool. A guiding groove for guiding the electrically conductive wire may be present on such a wheel, roller or the like. Furthermore, an arresting means for applying a certain tensile force onto the electrically conductive wire may be used as well (as part of the release tool, or even independently of the release tool). In particular, the arresting means may be controllable, so that the tensile force of the electrically conductive wire can be controlled (varied depending on the circumstances/controlled to stay at or around a certain target value). Only for completeness, it should be noted that in particular in case of a rotating mandrel, the release tool can be fixedly mounted in the production site, at least for normal setups and/or during the production cycle). Preferably, the release tool shows at least a raw tuning means and/or at least a fine tuning means. The raw tuning means may be designed to allow only stepwise calibrations (with increments between 1°, 2°, 3°, 5° (lower limit) and 2°, 3°, 5°, 10° (upper limit)). The fine tuning means, however, are preferably continually adjustable.

Furthermore, it is suggested to employ the method in a way that the electric conductive wire comprises copper and preferably essentially consists (essentially) of copper. Additionally or alternatively it is suggested to perform the method in a way that the electrically conductive wire comprises a plurality of filaments. Using copper or a suitable copper alloy is usually advantageous with respect to providing a good electric conductivity of the electrically conductive wire. Using a plurality of filaments can be advantageous with respect to a long lifetime of the resulting elastic hose. In particular when using a plurality of filaments, a repetitive bending of the elastic hose will usually not lead to early breaks of the electrically conductive wire, at least not to an extent that the electric conductivity of the electric conductive wire is compromised to an extent that the antistatic functionality of the elastic hose is significantly impaired. When using a plurality of filaments, it is possible to provide part of the filaments as copper-containing filaments (or filaments that essentially consist of copper), where the respective filaments are provided for a good electric conductivity. Other filaments may be made of steel or a different material, however. Such filaments may be provided for providing a certain stiffness of the resulting elastic hose or for realising different objects.

Furthermore, it is suggested to perform the method in a way that the thermoplastic material is placed in an essentially tangential direction and/or in a deflected tangential direction onto the mandrel, in particular in form of a band of extruded thermoplastic material, wherein preferably the section of the band that is placed onto the mandrel connects to a section of the band that was placed onto the mandrel earlier. It should be noted that the presently mentioned deflection angle of the band of extruded thermoplastic material and the previously mentioned deflection angle of the electrically conductive wire may be the same or may be different. First experiments have shown that the proposed method of fabrication of the elastic hose is particularly advantageous. In particular, the deflection angle (the angle enclosed by the deflected tangential direction and the "real" tangential direction) lies in an interval with a deflection angle α ≥ 0°, 1°, 2°, 3°, 4°, 5°, 6°, 7°, 8°, 9°, 10°, 11°, 12°, 13°, 14°, 15°, 16°, 17°, 18°, 19°, 20°, 22°, 24°, 26° or 28° (lower limit) to α ≤ 1°, 2°, 3°, 4°, 5°, 6°, 7°, 8°, 9°, 10°, 11°, 12°, 13°, 14°, 15°, 16°, 17°, 18°, 19°, 20°, 22°, 24°, 26°, 28° or 30° (upper limit). An advantage of this proposed method is that it is possible to use a standard extruder and/or an extruder with a comparatively small width of the extrusion orifice (typically in the order of 1 cm, 2 cm, 3 cm, 4 cm, 5 cm (lower limit) to 2 cm, 3 cm, 4 cm, 5 cm, 6 cm, 7 cm, 8 cm, 9 cm, 10 cm (upper limit) ) to produce the elastic hose. This can result in decreased manufacturing cost. Furthermore, using this proposal, it is particularly simple to produce an elastic hose with a varying thickness of the sheath of the hose in an axial direction of the elastic hose. In particular, this is a feature that is present with corrugated hoses, as they are known in the prior art as such. Using a deflected tangential direction may typically mean that the thermoplastic material is arranged on the mandrel in a spiral/helical way. If the band that is placed on the mandrel connects to a section of the band that was placed onto the mandrel earlier, a continuous hose can be realised easily.

"Connect" can mean that there is a certain overlap between the two bands, that there is a small gap between the two neighbouring bands or that the two bands essentially fit each other when being placed on the mandrel. Since the thermoplastic material is placed onto the mandrel is in a molten / liquid form, the neighbouring bands will flow into each other, forming a positive substance joint. This in turn will usually lead to a high mechanical strength of the resulting elastic hose, despite of the comparatively simple manufacturing technique.

In particular, it is proposed that the deflection angle of the thermoplastic material, in particular the deflection angle of the band of extruded thermoplastic material and/or the deflection angle of the electrically conductive wire when being placed onto the melted thermoplastic material, lies in the range between 0° and 30°, preferably between 5° and 20°, more preferably between 10° and 15°. First experiments have shown that this will result in a high-quality elastic hose with a good productivity of the method.

Furthermore, it is suggested that the method is performed in a way that the thermoplastic material, in particular the band of extruded thermoplastic material, comprises two distinguishable sections of at least a first thermoplastic material and a second thermoplastic material, the first and second thermoplastic material being different from each other. This way, it is possible to realise an elastic hose with and improved overall versatility. As an example, a first thermoplastic material (for example a PVC material) can be used to improve the mechanical strength, stiffness, abrasion resistance, resistance against kinks, or the like of the elastic hose. On the other hand, the second thermoplastic material (for example a comparatively elastic and soft PU material) can be provided to improve the flexibility of the resulting elastic hose, to improve the embedding of the electrically conductive wire within the thermoplastic material and so on. Furthermore, the two thermoplastic materials can be provided to realise a very good positive substance joining, resulting in a particularly durable elastic hose. The aforementioned may apply mutatis mutandis to a third, a fourth, a fifth and even further thermoplastic materials.

Further, it is suggested to realise the method in a way that the first and the second thermoplastic material differ with respect to their melting temperature and/or their viscosity in the molten phase (liquid phase) and/or their elasticity in the solid phase. This way, the functionality of the resulting elastic hose can usually be improved. Furthermore, the production process can be simplified as well. In particular, the melting temperature of the first and the second thermoplastic material may differ by 10°C, 20°C, 30°C or 40°C (lower limit) to 20°, 30°, 40° or 50°C (upper limit). This temperature difference has been found particularly suitable for inserting the electrically conductive wire. As an example, the first material may be produced from PVC that is extruded at a temperature between 180°C to 190°C, while the second material may be a PU material that is extruded at a temperature of 130°C to 140°C. It is even possible that between the step of extruding and the step of placing/inserting the electrically conductive wire, a certain cooling does occur and/or that the first material (in particular the material with a higher melting point) has already changed into its solid state, while the second material (in particular the material with a lower melting point) is still in its molten state. Certainly, it is preferred to place/insert the electrically conductive wire into the still melted thermoplastic material. The aforementioned may apply mutatis mutandis to a third, a fourth, a fifth and even further thermoplastic materials.

Furthermore, it is suggested to perform the method in a way that the distinguishable sections and/or the first and the second thermoplastic material show a different width and/or a different thickness, in particular when being placed on the mandrel. This way, in particular a corrugated elastic hose can be realised with a protruding web (or corrugation; as it is known for corrugated hoses in the state of the art as such). Furthermore, the production process can be particularly simple. In particular, the materials can be chosen in a way that the connection between the neighbouring bands may be particularly suitable/intimate/durable when the thermoplastic material is placed in an essentially tangential direction and/or in a deflected tangential direction onto the mandrel, as previously suggested. The aforementioned may apply mutatis mutandis to a third, a fourth, a fifth and even further thermoplastic materials and/or to a third, a fourth, a fifth and even further distinguishable sections.

Only for completeness it should be mentioned that extruding techniques according to the present state-of-the-art include extrusion techniques for extruding different material on/or for extruding material at different temperatures.

In particular, the method may be employed in a way that the elastic hose is advanced on the mandrel by an advancing means for advancing the elastic hose in an axial direction of the mandrel, where the advancing means is in contact with at least a part of the sheath of the elastic hose, in particular in a form locking contact with at least a part of the sheath of the elastic hose, wherein said advancing means is preferably part of the adjustable release tool, in particular a part of a roller of the adjustable release tool. This way, an axial movement of the elastic hose on the mandrel can be realised very easily, namely usually by the rotational movement of the mandrel itself. Furthermore, this embodiment might be particularly advantageous, since a (partial) form locking contact of the advancing means and the contacting part of the elastic hose may guide the relative release position/placement position of the electrically conductive wire (in particular relative to a corrugation/protruding web/spiral of a corrugated hose). The advancing means can be realised as one, two or a plurality of grooves that are arranged on a guiding roller that is used for guiding the electrically conductive wire.

Furthermore, it is suggested to perform the method in a way that the thermoplastic material is cooled between the step of placing the thermoplastic material onto the mandrel and the step of placing the electrically conductive wire onto the thermoplastic material, in particular by using a cooling fluid, preferably by using water and/or by cooling at least a certain section of the mandrel. It is to be noted that the mandrel itself can be cooled by a cooling fluid as well, for example by using cooling water. This way, placing of the thermoplastic material onto the mandrel and/or formation of a continuous, closed sheath of the elastic hose to be produced may be realised particularly simple, since the melted thermoplastic material can show a comparatively low viscosity and may thus show a flow characteristic on the mandrel. This way, the thermoplastic material can fluidly connect with other melted thermoplastic material (where the thermoplastic material can be the same material or a different material) by establishing positive substance joints. Nevertheless, by employing the proposed cooling step (for example by using an intermediate cooling means) before placing the electrically conductive wire, the respective thermoplastic material, possibly the radially inner regions of the thermoplastic material (in particular if the mandrel is cooled), can show an increased viscosity, so that the electrically conductive wire may be placed in a way that it is fully enclosed inside the thermoplastic material. This way, a very durable resulting elastic hose can be produced.

Furthermore, it is suggested to perform the method in a way that the elastic hose is cooled after the step of inserting the electrically conductive wire into the thermoplastic material, in particular to a temperature in which the thermoplastic material is solid. Preferably this can be done by using a cooling fluid, more preferably by using a bath of cooling fluid. In particular the cooling fluid or the bath of cooling fluid can be water. This way, usually no significant alterations of the freshly produced elastic hose (in particular when containing the electrically conductive wire) will occur any more, after the production process. Therefore, an increased quality of the product can be realised. In particular, the elastic hose can be removed from the mandrel and wound into coils for storage and shipment, as an example. Furthermore, the freshly produced elastic hose can be cleaned from any possible stains.

In particular, it is proposed to perform the method in a way that the elastic hose is formed as a corrugated hose. Such corrugated hoses are - as such - known in the state of the art. In particular, they are known to be highly elastic, yet resistant to kinks. Furthermore, they are known to be very durable, in particular when being compared to standard elastic hoses.

Preferably, the electrically conductive wire is arranged in an intermediate section neighbouring a protruding section of the elastic hose (in particular as seen in an axial direction). In general, the electrically conductive wire should be placed (in particular as seen in a radial direction) in a way that it is fully contained in the surrounding thermoplastic material. This way, a particularly durable elastic hose can be realised.

Furthermore, an elastic hose is suggested that comprises an electrically conductive wire, wherein the elastic hose was produced using a method according to the previous disclosure. In particular, the elastic hose can be a corrugated hose. The resulting elastic hose or corrugated hose can show the same features and advantages, as previously described, at least in analogy. Furthermore, the respective elastic hose or corrugated hose can be modified in the previously described sense as well, at least in analogy. In particular, a thus modified elastic hose/corrugated hose will usually show the same features and advantages of the respective modifications as previously described, at least in analogy.

In particular it is possible to design the elastic hose in a way that the electrically conductive wire protrudes from the thermoplastic material at at least one end of the hose, preferably at both ends of the hose. Using this design, the resulting elastic hose can be (electrically) grounded easily. Therefore, any buildup of electrostatic charges can be suppressed very efficiently. Typically, the protrusion of the electrically conductive wire outside of the elastic hose is between 5 cm, 10 cm or 15 cm (lower limit) and 10 cm, 20 cm, 30 cm, 40 cm or 50 cm (upper limit).

Even further, a production arrangement for producing an elastic hose is proposed, where the production arrangement comprises a rotatably arranged mandrel, an extruding device for extruding a melted thermoplastic material onto the mandrel, and an adjustable wire release tool for placing an electrically conductive wire onto a part of the extruded thermoplastic material that is located on the mandrel, wherein the production arrangement is designed and arranged to perform a method according to the presently proposed method and/or to produce an elastic hose according to the present disclosure. The production arrangement can show the same features and advantages, as previously described, at least in analogy. Furthermore, the respective production arrangement can be modified in the previously described sense as well, at least in analogy. In particular, a thus modified production arrangement will usually show the same features and advantages of the respective modifications as previously described, at least in analogy.

In particular, the adjustable wire release tool of the production arrangement may comprise at least an advancing means for advancing the elastic hose in an axial direction of the mandrel. This way, the axial movement of the elastic hose can be realised very simple, in particular by the rotating movement of the rotatably arranged mandrel.

Further advantages, features, and objects of the invention will be apparent from the following detailed description of the invention in conjunction with the associated drawings, wherein the drawings show:
- Fig. 1:: an arrangement for producing a corrugated hose, elucidating the method according to the present disclosure, in a schematic perspective view;
- Fig. 2:: the release tool for the electrically conductive wire, as used for the arrangement of Fig. 1, in different views;
- Fig. 3:: a schematic cross section through a finished antistatic corrugated hose;
- Fig. 4:: an antistatic corrugated hose with protruding copper wires both of at its ends.

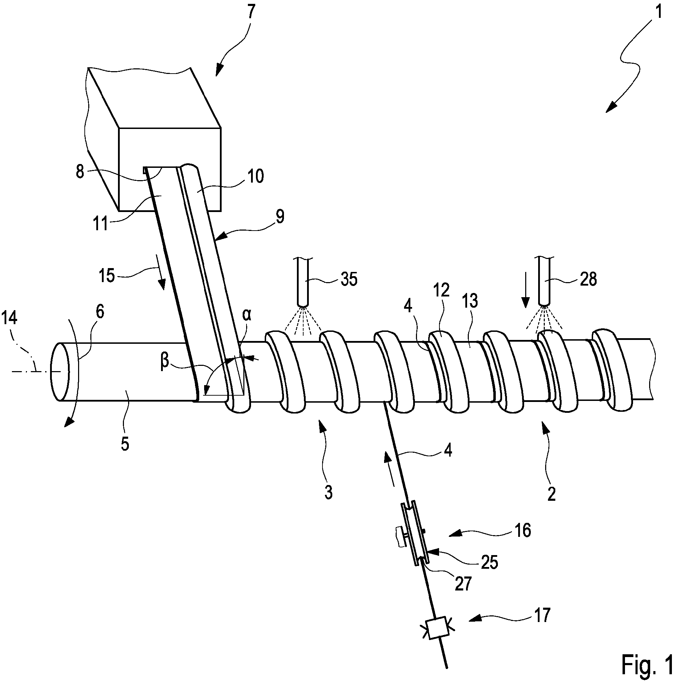

Fig. 1 shows a schematic view of a production arrangement 1 for producing an antistatic corrugated hose 2. The antistatic corrugated hose 2 is essentially a corrugated hose 3, into which an electrically conductive wire, presently a copper wire 4, is inserted. The copper wire 4 is used to discharge any buildup of electrostatic charges by conveying the electric charges to a certain potential, typically ground potential. Such a buildup of electrostatic charges can occur, if the hose is used to convey goods, in particular in case solid particles are conveyed in the antistatic corrugated hose 2.

The production arrangement 1 comprises a rotating mandrel 5 (present rotating direction is indicated by an arrow 6). An extruding device 7 for thermoplastic material is used for manufacturing a band 9 of thermoplastic material to be placed on the rotating 6 mandrel 5. Presently the extruding device 7 may heat up and melt two different thermoplastic materials, where the two thermoplastic materials are extruded by an extruding die 8 as a combined band 9. The band 9 of thermoplastic material leaves extruding die 8. In detail, the band 9 shows two sections 10, 11, namely a first section 10 with a rib-like shape, forming the protruding web 12 (the corrugation/the spiral of the corrugated hose) of the antistatic corrugated hose 2, and a second section 11, forming an essentially flat part that forms the intermediate section 13 of the antistatic corrugated hose 2 to be produced. It is to be noted that initially the extruded band 9, and thus the initial corrugated hose 3 does not contain a copper wire 4. The copper wire 4 will be included later, as will be explained in the following.

In even more detail, the first section 10, forming the protruding web 12 of the antistatic corrugated hose 2 is presently produced from polyvinyl chloride (PVC). The PVC is heated to 180°C to 190°C in the extruding device 7, leaving the extruding die 8 at approximately this temperature.

The second section 11 of the band 9 of thermoplastic material, forming the intermediate section 13 of the antistatic corrugated hose 2, consists presently of comparatively soft polyurethane (PU). The PU material is heated in the extruding device 7 to a temperature of approximately 140°C to 150°C. Accordingly, the PU material leaves the extruding die 8 of the extruding device 7 at approximately this temperature.

As can be seen from Fig. 1, the band 9 of thermoplastic material is fed to the rotating mandrel 5 at a certain deflection angle α, which is presently chosen to be about 10°. The deflection angle α is enclosed by the axial direction of the band 9 (equal to the direction of movement 15 of the band 9) and the tangential direction of the mandrel 5 (at the point, where the band 9 first contacts the mandrel 5). It is clear from the depicted geometry that the angle β between the central axis 14 of the mandrel 5 and the moving direction 15 of the band 9 obeys the equation α+β=90°.

As can be seen from Fig. 1, the section of the band 9 of thermoplastic material that is currently placed onto the rotating mandrel 5 will be placed in a way that it will contact the previously arranged thread of the spirally arranged band 9 of thermoplastic material. Therefore, in the respective contact region of the "present" first section 10 and the "previous" second section 11, a contact will be established, and thanks to the still melted thermoplastic materials, a mingling of the materials of the different parts of the different threads of the band 9 will be established, forming a positive substance joint with a good mechanical stability.

Presently, the rotating mandrel 5 is slightly cooled, so that the viscosity of the thermoplastic material of the band 9 increases in the radially inner sections of the sheath, neighbouring the rotating mandrel 5 (the respective sections may even solidify), due to the low temperature of the rotating mandrel 5. Further, an intermediate cooling means 35 is provided, which can be a dispensing orifice of cooling water or the like. The (presently used) PVC material of the protruding web 12, showing a higher melting point as compared to the (presently used) PU material of the intermediate section 13, will essentially harden by the cooling action of this intermediate cooling means 35. However, the radially outside parts of the intermediate section 13 of the band 9 of the corrugated hose 3 (still without a copper wire 4) are still liquid at this position, thanks to the lower melting point of the (presently chosen) PU material.

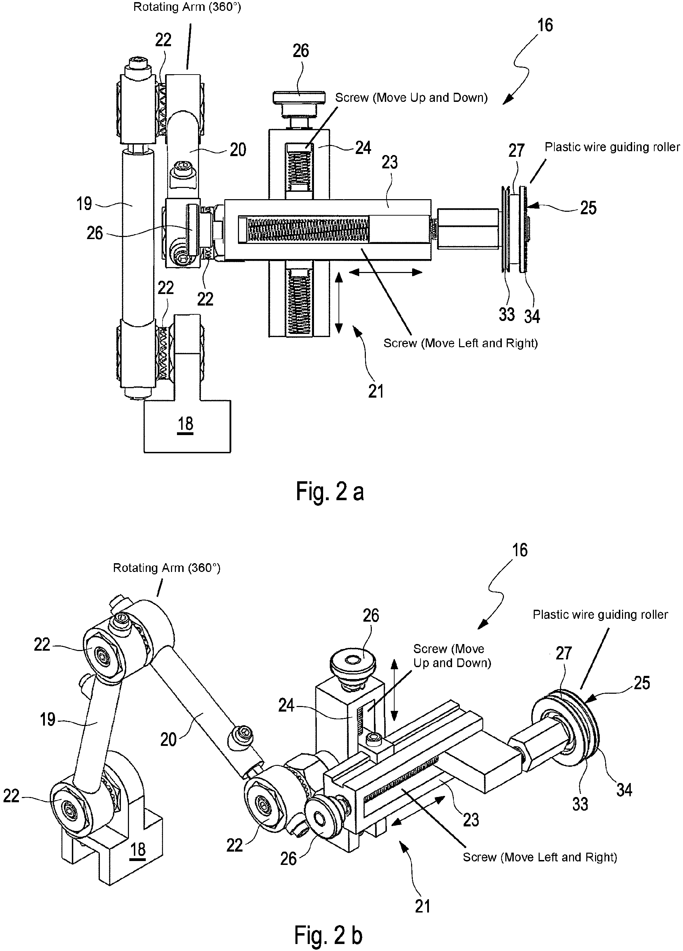

As can be seen from Fig. 1, at a distance of some threads of the solid coil (that is formed by the spirally arranged protruding web 12 of the corrugated hose 3) downward of the position where the band 9 of thermoplastic material first contacts the mandrel 5, a copper wire 4 is placed on the outside of the corrugated hose 3 (where the respective part of the thermoplastic material of the intermediate section 13 of the corrugated hose 3 is still liquid, at least in a section of the sheath of the corrugated hose 3 that is located on the radial outside part), using a wire release tool 16. The wire release tool 16 is schematically shown in Fig. 1. A possible detailed setup of the wire release tool 16 will be elucidated in the following with reference to Fig. 2.

In particular, wire release tool 16 comprises a tensioning device 17 that exerts a certain tension on the copper wire 4 when being placed on the corrugated hose 3. This tension on the copper wire 4 will effectuate a component of force that points in a direction normal to the surface of the thermoplastic material 9 that is arranged on the mandrel 5 at a certain section of the later sheath 29 of the antistatic corrugated hose 2, which in turn will so-to-say pull the copper wire 4 in its final radial position within the sheath 29 of the completed antistatic corrugated hose 2. In particular, the tensioning device 17 can be designed to be controllable. In particular, the tensioning device 17 can comprise a sensor element and a tensioning element. The sensor element assesses the current tension on the copper wire 4 and based on the measurement value of the sensor element, the tensioning element is appropriately adjusted so that an essentially constant tension of the copper wire 4 results. In particular, the tension is currently chosen to be in the order of 40 N. First experiments have shown that a certain variation in the order of ±5 N does not significantly deteriorate the quality of the resulting corrugated hose 3.

The wire release tool 16 can be adjusted with respect to the release position of the copper wire 4, i.e. with respect to the position where the copper wire 4 is placed relatively to the protruding web 12 and/or the intermediate section 13 of the pre-formed corrugated hose 3 (no copper wire 4 yet) and/or the mandrel 5.

First experience with an experimental setup of the presently suggested production arrangement 1 shows that it is sufficient to adjust the wire release tool 16 manually, in particular in light of the guiding effect of the partial form locking contact between the side grooves 33, 34 of the wire guiding roller 25 of the wire release tool 16, as will be explained in the following. In particular, an adjustment is made initially, when setting up the production arrangement 1. Furthermore, frequent manual inspection (for example in the order of a quarter of an hour, half an hour, or even an hour) might indicate the necessity for some readjustment of the wire release tool 16 to further improve the quality of the resulting antistatic corrugated hose 2.

The design of the wire release tool 16 is shown in more detail in Fig. 2 in different views. Fig. 2a shows a schematic view from the front, while Fig. 2b shows a schematic perspective view of the wire release tool 16. It is to be noted that in the present setup, the tensioning device 17 for the copper wire 4 is designed as a separate device being independent from the wire release tool 16.

The wire release tool 16 shows a mount 18 for fixedly arranging the wire release tool 16 at the edge of a wall. The wire release tool 16 shows presently two limbs 19, 20 and a fine adjustment tool 21. Between the mount 18, the limbs 19, 20 and the fine adjustment tool 21, a pivot joint 22 is used, respectively. Presently, the pivot joints 22 cannot be adjusted continuously, but only incrementally with small increments of presently 5°. This incremental change of the pivot joints 22 makes the setup of the wire release tool 16 more robust (in particular no creep will occur at the incremental pivot joints 22). This may be addressed to as a raw adjustment part of the wire release tool 16.

The fine adjustment tool 21 forms a part of the wire release tool 16. The fine adjustment tool 21 shows a first and a second adjustment spindle 23, 24, where the first adjustment spindle 23 is arranged horizontally (allowing an adjustment of the wire guiding roller 25 in a horizontal direction (in the view of Fig. 1 to the left and right), while the second adjustment spindle 24 allows the vertical adjustment of the wire guiding roller 25 (into an out of the plane of projection of Fig. 1). For simplifying the adjustment process, both first and second adjustment spindle 23, 24 show a handle 26, respectively. The wire guiding roller 25 is presently designed as a wheel that can be rotated relative to the wire release tool 16. As can be seen, the wire guide 25 shows a central groove 27 for guiding the copper wire 4 to be placed onto the preformed corrugated hose 3, to complete the antistatic corrugated hose 2.

It is to be noted that due to the defined tensioning force of the copper wire 4 and the defined temperatures of the respective parts (in particular the protruding web 12 and the intermediate section 13 of the preformed corrugated hose 3), the copper wire 4 will be pulled into the still (at least partially) melted thermoplastic material of the intermediate section 13 of the preformed corrugated hose 3, so that a intimate contact between the copper wire 4 and the thermoplastic material of the antistatic corrugated hose 2 will be established. Preferably, this intimate contact will be a positive form fit contact.

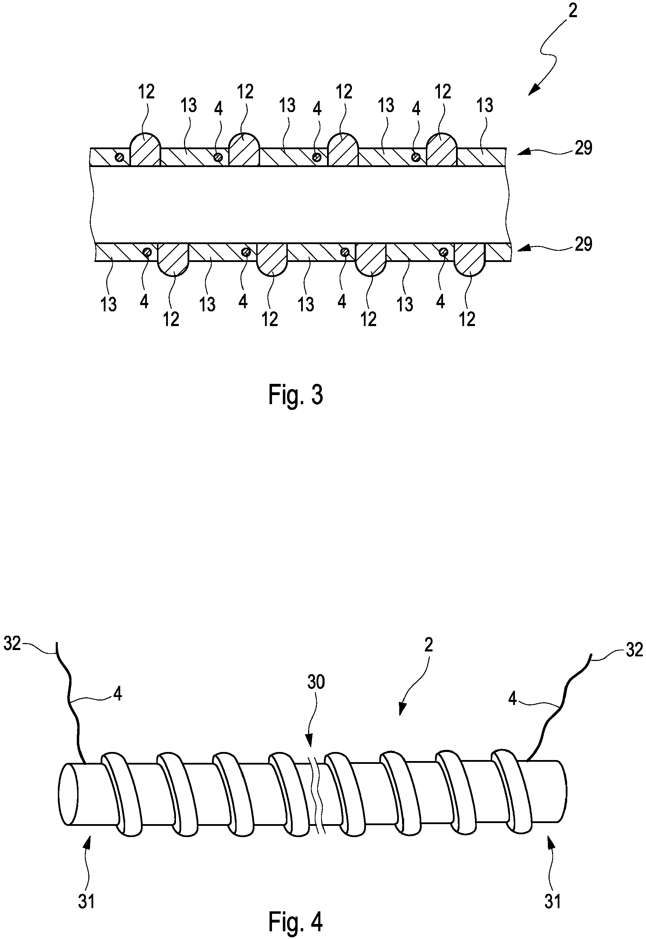

On the other hand, due to the intermediate cooling arrangement 35, the (present) PVC-material of the protruding web 12 (corrugation or spiral of the corrugated hose) has already hardened/solidified. The side grooves 33 and 34 of the wire guiding roller 25 do contact the protruding web 12 in a (partially) form locking way. Based on the deflection angle α of the band 9 (which is equal to the angle of the spiral of the protruding web 12) and the rotational movement 6 of the mandrel 5, this (partial) form locking engagement of the side grooves 33, 34 with the protruding web 12 will result in a force in the axial direction 14 of the antistatic corrugated hose 2, resulting in an axial movement of the antistatic hose 2. Furthermore, this (partial) form locking engagement will guide the copper wire 4 to an optimum relative position of the copper wire 4 with respect to the protruding web 12 and intermediate section 13 of the antistatic corrugated hose 2. As first experiments have indicated, the optimum position seems to be located within the intermediate section 13, essentially neighbouring the part of the antistatic corrugated hose 4 with the protruding web 12 (see Fig. 3).

After having placed the copper wire 4 on the preformed corrugated hose 3 and after having "pulled the copper wire 4 into the thermoplastic material" of the corrugated hose 3, the now antistatic corrugated hose 2 (containing the copper wire 4) will be further cooled by water cooling arrangement 28, so that the thermoplastic material of the antistatic corrugated hose 2 (including the thermoplastic material of the intermediate section 13) will solidify. Presently, the water cooling arrangement 28 is shown as a die, releasing running water. However, the water cooling arrangement 28 can be also a water bath.

First experiments have shown that a water bath with water at a temperature of around 10°C is particularly advantageous for a fast solidification of the thermoplastic material.

Fig. 3 shows a schematic cross section through a finished antistatic corrugated hose 2.

As one can see, the sheath 29 of the antistatic corrugated hose 2 is comprised of a spiral of rigid thermoplastic material 12, the "protruding web" 12 (or the corrugation 12 of the corrugated hose 2). Presently, the protruding web 12 is manufactured from PVC.

Between the different threads of the spool of rigid material/the protruding web 12, an intermediate section 13 is arranged. In effect, the intermediate section 13 also follows the threads of a coil. Presently, the intermediate section 13 is produced from a soft polyurethane PU material.

As can also be seen from Fig. 3, the copper wire 4 is fully contained (i.e. fixed in positive form locking way) in the thermoplastic material of the intermediate section 13. Again, the copper wire 4 forms a coil-like arrangement as well.

Although the protruding web 12 and the intermediate section 13 essentially consist of a different material (which is shown by a different hatching in Fig. 3), in the contact section, where the two materials (presently PVC and PU) meet, a transition region will form, where a certain material mingling will occur. This material mingling is even advantageous, since it will yield a good mechanical strength.

As can be also seen from Fig. 3, the copper wire 4 is fully contained in the intermediate section 13. In particular, the still liquid plastic material did close behind the copper wire 4, once the copper wire 4 has been "pulled into" the material of the thermoplastic material of the intermediate section 13. Therefore, the copper wire 4 is locked in a positive form locking way within the intermediate section 13, presently a PU material. Furthermore, one can see that the axial positioning of the copper wire 4 is presently very close to and usually essentially neighbouring the thermoplastic material of the protruding web 12 (presently PVC). It might even be the case that at least part of the copper wire 4 lies within the transition zone, where a certain mingling of (presently) PVC and PU material did occur.

Fig. 4 shows a completed antistatic corrugated hose 2. For reasons of presentation, the middle section 30 of the antistatic corrugated hose 2 is not shown in Fig. 4. The "missing" middle section 30 can have a length of several metres or even several tens of metres).

As can be seen in Fig. 1, at both ends 31 of the antistatic corrugated hose 2, the copper wire 4 protrudes 32 from the respective ends 31. A typical length of protrusion 32 of the copper wire 4 is 10 cm to 30 cm. Using this protrusion 32 of copper wire 4 one can establish an electric contact with electrical ground or the like for bleeding off any electrostatic charges.

It is to be noted that a single one or a plurality of the features of the presently disclosed detailed embodiment may be used in combination with the generic description of the present disclosure.

## Claims

1. A method for producing an elastic hose (2), the method comprising:
- providing a thermoplastic material (9) in a molten state,
- providing the melted thermoplastic material (9) onto a mandrel (5),
- placing an electrically conductive wire (4) onto the melted thermoplastic material (9),
- inserting the electrically conductive wire (4) into the melted thermoplastic material (9) by applying a force that causes a component of force in at least a section of the electrically conductive wire (4) that points in a direction normal to the surface of the thermoplastic material (9).

2. A method according to claim 1, **characterised in that** the electrically conductive wire (4) is placed onto the thermoplastic material (9) in an essentially tangential direction and/or in a deflected (α) tangential direction, wherein preferably a defined tensile force, more preferably a controlled tensile force, acts onto the electrically conductive wire (4).

3. A method according to any of the preceding claims, in particular according to claim 2, **characterised in that** the electrically conductive wire (4) is placed onto the melted thermoplastic material (9) by an adjustable release tool (16), wherein the release tool (16) is preferably adjustable with respect to its release position and/or the tensile force that acts onto the electrically conductive wire (4).

4. A method according to any of the preceding claims, in particular according to any of claims 2 or 3, **characterised in that** the thermoplastic material (9) is placed in an essentially tangential direction and/or in a deflected tangential direction (α) onto the mandrel (5), in particular in form of a band of extruded thermoplastic material (9), wherein preferably the section of the band (9) that is placed onto the mandrel (5) connects to a section of the band (9) that was placed onto the mandrel (5) earlier.

5. A method according to any of the preceding claims, in particular according to claim 4, **characterised in that** the thermoplastic material (9), in particular the band (9) of extruded thermoplastic material, comprises two distinguishable sections (10, 11) of at least a first thermoplastic material (10) and a second thermoplastic material (11), the first and second thermoplastic material (10, 11) being different from each other.

6. A method according to any of the preceding claims, in particular according to claim 5, **characterised in that** the first and the second thermoplastic material (10, 11) differ with respect to their melting temperature and/or their viscosity in their molten phase (liquid phase) and/or their elasticity in their solid phase.

7. A method according to any of the preceding claims, preferably according to claim 5 or 6, **characterised in that** the distinguishable sections (10, 11) and/or the first and the second thermoplastic material (10, 11) show a different width and/or thickness, in particular when being placed on the mandrel (5).

8. A method according to any of the preceding claims, in particular according to any of claims 3 to 7, **characterised in that** the elastic hose (2) is advanced on the mandrel (5) by an advancing means (33, 34) for advancing the elastic hose (2) in an axial direction of the mandrel (5), where the advancing means (33, 34) is in contact with at least a part of the sheath (29) of the elastic hose (2), in particular in a form locking contact with at least a part of the sheath (29) of the elastic hose (2), wherein said advancing means (33, 34) is preferably part of the adjustable release tool (16), in particular a part of a roller (25) of the adjustable release tool (16).

9. A method according to any of the preceding claims, **characterised in that** the thermoplastic material (9) is cooled between the step of placing the thermoplastic material onto the mandrel (5) and the step of placing the electrically conductive wire (4) onto the thermoplastic material (9), in particular by using a cooling fluid, preferably by using water and/or by cooling at least a certain section of the mandrel (5).

10. A method according to any of the preceding claims, **characterised in that** the elastic hose (2) is cooled after the step of inserting the electrically conductive wire (4) into the thermoplastic material (9), in particular to a temperature in which the thermoplastic material is solid, preferably by using a cooling fluid (28), more preferably by using a bath of cooling fluid, more preferably by using water.

11. A method according to any of the preceding claims, in particular according to any of claims 5 to 10, **characterised in that** the elastic hose (2) is formed as a corrugated hose (2) and/or **characterised in that** the electrically conductive wire (4) is arranged in an intermediate section (11, 13) neighbouring a protruding section (10, 13) of the elastic hose (2).

12. Elastic hose (2), in particular corrugated hose (2), comprising an electrically conductive wire (4), **characterised in that** was produced using a method according to any of claims 1 to 11.

13. Elastic hose (2) according to claim 12, **characterised in that** the electrically conductive wire (4) protrudes from the thermoplastic material (9) at at least one end (31) of the hose (2), preferably at both ends (31) of the hose (2).

14. Production arrangement (1) for producing an elastic hose (2), comprising a rotatably arranged mandrel (5), an extruding device (7) for extruding a melted thermoplastic material (9) onto the mandrel (5), and an adjustable wire release tool (16) for placing an electrically conductive wire (4) onto a part of the extruded thermoplastic material (9) that is located on the mandrel (5), **characterized in that** the production arrangement (1) is designed and arranged to perform a method according to any of claims 1 to 11 and/or that the production arrangement (1) is designed and arranged to produce an elastic hose (2) according to claim 12 or 13.

15. A production arrangement (1) according to claim 14, **characterised in that** at least the adjustable wire release tool (16) comprises at least an advancing means (33, 34) for advancing the elastic hose (2) in an axial direction of the mandrel (5).

## Amended claims

### Amended claims in accordance with Rule 137(2) EPC.

1. A method for producing an elastic hose (2), the method comprising:
- providing a thermoplastic material (9) in a molten state,
- providing the melted thermoplastic material (9) onto a mandrel (5),
- placing an electrically conductive wire (4) onto the melted thermoplastic material (9),
- inserting the electrically conductive wire (4) into the melted thermoplastic material (9) by applying a force that causes a component of force in at least a section of the electrically conductive wire (4) that points in a direction normal to the surface of the thermoplastic material (9), wherein the electrically conductive wire (4) is placed onto the thermoplastic material (9) in an essentially tangential direction and/or in a deflected (α) tangential direction,
**characterised in that** a defined tensile force acts onto the electrically conductive wire (4) such that the electrically conductive wire (4) is fully enclosed within the melted thermoplastic material (9) after inserting.

2. A method according to claim 1, **characterised in that** a controlled tensile force acts onto the electrically conductive wire (4).

3. A method according to any of the preceding claims, in particular according to claim 2, **characterised in that** the electrically conductive wire (4) is placed onto the melted thermoplastic material (9) by an adjustable release tool (16), wherein the release tool (16) is preferably adjustable with respect to its release position and/or the tensile force that acts onto the electrically conductive wire (4).

4. A method according to any of the preceding claims, in particular according to any of claims 2 or 3, **characterised in that** the thermoplastic material (9) is placed in an essentially tangential direction and/or in a deflected tangential direction (α) onto the mandrel (5), in particular in form of a band of extruded thermoplastic material (9), wherein preferably the section of the band (9) that is placed onto the mandrel (5) connects to a section of the band (9) that was placed onto the mandrel (5) earlier.

5. A method according to any of the preceding claims, in particular according to claim 4, **characterised in that** the thermoplastic material (9), in particular the band (9) of extruded thermoplastic material, comprises two distinguishable sections (10, 11) of at least a first thermoplastic material (10) and a second thermoplastic material (11), the first and second thermoplastic material (10, 11) being different from each other.

6. A method according to any of the preceding claims, in particular according to claim 5, **characterised in that** the first and the second thermoplastic material (10, 11) differ with respect to their melting temperature and/or their viscosity in their molten phase (liquid phase) and/or their elasticity in their solid phase.

7. A method according to any of the preceding claims, preferably according to claim 5 or 6, **characterised in that** the distinguishable sections (10, 11) and/or the first and the second thermoplastic material (10, 11) show a different width and/or thickness, in particular when being placed on the mandrel (5).

8. A method according to any of the preceding claims, in particular according to any of claims 3 to 7, **characterised in that** the elastic hose (2) is advanced on the mandrel (5) by an advancing means (33, 34) for advancing the elastic hose (2) in an axial direction of the mandrel (5), where the advancing means (33, 34) is in contact with at least a part of the sheath (29) of the elastic hose (2), in particular in a form locking contact with at least a part of the sheath (29) of the elastic hose (2), wherein said advancing means (33, 34) is preferably part of the adjustable release tool (16), in particular a part of a roller (25) of the adjustable release tool (16).

9. A method according to any of the preceding claims, **characterised in that** the thermoplastic material (9) is cooled between the step of placing the thermoplastic material onto the mandrel (5) and the step of placing the electrically conductive wire (4) onto the thermoplastic material (9), in particular by using a cooling fluid, preferably by using water and/or by cooling at least a certain section of the mandrel (5).

10. A method according to any of the preceding claims, **characterised in that** the elastic hose (2) is cooled after the step of inserting the electrically conductive wire (4) into the thermoplastic material (9), in particular to a temperature in which the thermoplastic material is solid, preferably by using a cooling fluid (28), more preferably by using a bath of cooling fluid, more preferably by using water.

11. A method according to any of the preceding claims, in particular according to any of claims 5 to 10, **characterised in that** the elastic hose (2) is formed as a corrugated hose (2) and/or **characterised in that** the electrically conductive wire (4) is arranged in an intermediate section (11, 13) neighbouring a protruding section (10, 13) of the elastic hose (2).

12. Elastic hose (2), in particular corrugated hose (2), comprising an electrically conductive wire (4), **characterised in that** was produced using a method according to any of claims 1 to 11.

13. Elastic hose (2) according to claim 12, **characterised in that** the electrically conductive wire (4) protrudes from the thermoplastic material (9) at at least one end (31) of the hose (2), preferably at both ends (31) of the hose (2).
